# EUROPÄISCHE PATENTSCHRIFT

(11) **EP 4 051 943 B1**
(45) Veröffentlichungstag und Bekanntmachung des Hinweises auf die Patenterteilung: **24.07.2024**
(21) Anmeldenummer: 20786537.9
(22) Anmeldetag: 06.10.2020
(51) Int. Cl.: F16L 37/091, F16L 37/098

(54) **FLUIDLEITUNGSKUPPLUNG**
FLUID LINE COUPLING
ACCOUPLEMENT DE CONDUITES DE FLUIDE

(30) Priorität: 30.10.2019 DE 102019216782
(43) Veröffentlichungstag der Anmeldung: 07.09.2022
(73) Patentinhaber: ContiTech Techno-Chemie GmbH, 61184 Karben (DE)
(72) Erfinder: KUHLHOFF, Florian, 30165 Hannover (DE); FLACH, Axel, 30165 Hannover (DE)
(74) Vertreter: Continental Corporation
(86) Internationale Anmeldenummer: PCT/EP2020/077956
(87) Internationale Veröffentlichungsnummer: WO 2021/083621

(56) Entgegenhaltungen:
- EP-A1- 0 719 971
- EP-A2- 0 926 420

## Beschreibung

Die Erfindung betrifft eine reversibel lösbare Fluidleitungskupplung, mindestens aufweisend eine Kupplungsmuffe, ein Verriegelungselement und einen Kupplungsstecker. Fluidleitungskupplungen der genannten Art sind in vielfacher Anwendung im Einsatz. Ein wichtiges Einsatzgebiet ist der Automobilbau. Dort werden vorwiegend VDA-Kupplungen, d.h. Kupplungen mit standardisierten Verbindungsgeometrien eingesetzt. Bei der Anwendung in Kühlwasserleitungen sind wegen der dort herrschenden relativ geringen Belastungen die Kupplungen vorwiegend komplett aus Kunststoff ausbildbar, was einen Kosten- und Gewichtsvorteil mit sich bringt. In der DE 10 2017 212 004 A1 ist eine derartige Kupplung offenbart. EP 0 719 971 A1 zeigt in den Figuren 7-10 eine Kupplung mit einer ringförmigen Klammer, die einen Knopf zur verbesserten Entriegelung aufweist. Die Klammer liegt an einem ringförmigen Steg an.

Im Bereich von Ladeluftleitungen herrschen dagegen starke dynamische Druckbelastungen und hohe Temperaturen. Daher sind die genannten Kupplungen oft teilweise oder gänzlich aus Metall oder metallverstärkt ausgebildet. In der AT 517085 B1 ist eine derartige gattungsbildende Kupplung mit metallverstärkter Kupplungsmuffe offenbart.

Die derzeitigen Lösungen lassen daher im Ladeluftbereich nur vereinzelt Ladeluftkupplungen aus Kunststoff zu. Sind die Belastungen von Druck, Temperatur und dynamischen Bewegungen zu hoch, fallen die Stecksysteme am Kupplungskopf aus. Der Kupplungskopf reißt an den Eingriffsstellen des Verriegelungselements. Durch die starre Verbindung von Kupplungskörper und Stutzen, die sich innerhalb der Fertigungstoleranzen fügen lassen müssen, ergibt sich eine punktuelle Belastung. Bei einigen Lösungen wurde dies durch einen zusätzlichen innenliegenden Ring kompensiert. Bei Kunststoffkupplungen kann dies durch eine breitere Auflagefläche kompensiert werden, damit die Flächenpressung nicht zu groß ist. Das Hauptproblem ist, dass durch Motorbewegung und zusätzlich aus der Aufweitung der Schläuche Kräfte resultieren, die Kupplung und Stutzen innerhalb der Fügetoleranz kippen. Dies führt zu einer punktuellen Überlastung.

Der Erfindung lag die Aufgabe zugrunde, eine Fluidleitungskupplung der eingangs geschilderten Art zu schaffen, die unter Vermeidung der genannten Schwierigkeiten aus Kunststoff aufgebaut sein kann.

Diese Aufgabe wird dadurch gelöst, dass die Kupplung mindestens zwei ringartige Kupplungsteile, nämlich einen Kupplungskopf und einen Kupplungskörper aufweist, wobei Kupplungskopf und Kupplungskörper aus Kunststoff ausgebildet und fluiddicht und unlösbar zu einer rohrförmigen, zum Einstecken des Kupplungssteckers geeigneten Kupplungsmuffe mit einer ersten, dem Kupplungskopf zugeordneten Öffnung zum Einstecken des Kupplungssteckers und einer zweiten, dem Kupplungskörper zugeordneten Öffnung zum Anschluss weiterer Fluidleitungen verbunden sind, wobei der Kupplungskopf in Umfangsrichtung ausgerichtete Schlitze und ringsegmentartige, nach radial außen weisende Stützstege aufweist und das Verriegelungsbauteil als flacher offener Federstahlring mit radial ins Innere des Federstahlrings ragenden, auf dem Umfang des Federstahlrings verteilten Rastkrallen und axial ausgerichteten Stützzungen ausgebildet ist, wobei das Verriegelungsbauteil im Bereich des Kupplungskopfes den Kupplungskopf federnd umfasst derart, dass die Rastkrallen durch die Schlitze im Kupplungskopf ins Innere der Kupplungsmuffe hineinragen und die Stützzungen des Federstahlrings mit den Stützstegen des Kupplungskopfes so korrespondieren, dass jeweils eine Stützzunge einem Stützsteg zugeordnet ist.

In eine derartige Kupplung ist der Kupplungsstecker einsteckbar, der beispielsweise gemäß den Richtlinien des VDA ausgebildet sein kann. Der konische Teil des Kupplungssteckers drückt beim Einstecken in die Kupplungsmuffe die Rastkrallen nach außen. Beim Erreichen der vorgesehenen Verrastungsposition schnappen die Rastkrallen dann in eine Rastnut des Kupplungssteckers ein. Bei axialer Belastung des Kupplungssteckers gegen die Kupplungsmuffe kann sich dann das Verriegelungsbauteil mit seinen Stützzungen gegen die Stützstege des Kupplungskopfes abstützen, sodass keine punktförmige, sondern eine flächig verteilte Krafteinleitung in den Kupplungskopf erfolgt. Dadurch ist die Belastung des Kupplungskopfes so reduziert, dass auch Kunststoffe als Kupplungsmaterial einsetzbar sind.

In einer Weiterbildung der Erfindung ist der Kupplungskopf mindestens in dem zur Umfassung durch das Verriegelungsbauteil vorgesehenen Bereich konisch ausgebildet, wobei der größere Durchmesser des Konus der Einstecköffnung des Kupplungssteckers zugeordnet ist.

Findet die Belastung der Kupplung nicht rein axial statt, so kann es dazu kommen, dass der eingesteckte Kupplungsstecker in dem Kupplungskopf etwas kippt. Dies führt zu einer zunächst einseitigen Zugbelastung zwischen Kupplungskopf und Kupplungsstecker. Damit einher geht auch, dass sich das Verriegelungsbauteil zunächst nur an einer Stelle am Umfang des Kupplungskopfes abstützt.

Bei einer starren Verbindung kann dies trotz Abstützung des Verriegelungsbauteils über die Stützzungen zu einer örtlichen Überlastung führen. Durch die Konizität des Kupplungskopfes ist jedoch eine elastische Kippung der Rastkrallen ermöglicht, da auch der Federstahlring sich örtlich in den durch die Konizität des Kupplungskopfes gebildeten Zwischenraum elastisch wellenartig verformen kann. Dies führt dazu, dass nacheinander auch die benachbarten Rastkrallen eine entsprechende elastische Verformung erfahren können und so auch bei Kippungen eine gleichmäßigere Krafteinleitung in den Kupplungskopf möglich ist.

In einer Weiterbildung der Erfindung weisen die Stützstege des Kupplungskopfes an ihren jeweils radial außen gelegenen Enden von der Einstecköffnung der Kupplungsmuffe axial zurück weisende Sperrnasen auf, die radial vom Kupplungskopf beabstandet sind, wobei der Abstand zwischen Sperrnasen und Kupplungskopf für das Eingreifen der Stützzungen des Verriegelungsbauteils geeignet ist.

Die Sperrnasen können verhindern, dass bei großen Belastungen die Stützzungen radial nach außen über die Stützstege abrutschen.

In einer Weiterbildung der Erfindung sind die Stützzungen des Verriegelungsbauteils an ihren den Stützstegen des Kupplungskopfes zugeordneten Enden in Umfangsrichtung der Kupplungsmuffe abgeschrägt und weisen die Stützstege des Kupplungskopfes jeweils eine zur Abschrägung der Stützzungen korrespondierende Schrägung auf, wobei die Schrägungen in der Art eines Rechts- sowie in der Art eines Linksgewindes ausgebildet sind und die Anzahl der links und rechts ausgerichteten Schrägungen gleich ist.

Durch die Schrägungen werden auf den Federstahlring bei axialer Belastung Kräfte in Umfangsrichtung aufgebracht. Dadurch, dass die Schrägungen einerseits rechtsdrehend, andererseits linksdrehend wirken, ist bei entsprechender Abfolge der Schrägungen in Umfangsrichtung eine Schließkraft in Richtung auf die Öffnung des Verriegelungsbauteils erzeugbar.

In einer Weiterbildung der Erfindung weisen die Rastkrallen des Verriegelungsbauteils jeweils paarweise unterschiedliche radiale Längen auf.

Um den Kupplungsstecker in die Kupplungskopf einstecken zu können, ist es erforderlich, das Verriegelungsbauteil zunächst aufzuweiten. Dies geschieht dadurch, dass der Kupplungsstecker mit seinem Konus die in die Kupplungsmuffe hineinragenden Rastkrallen beim Einstecken radial nach außen drängt. Um die Einsteckkraft möglichst klein zu halten, ist es sinnvoll, nicht alle Rastkrallen gleichzeitig zu bewegen. Die unterschiedlichen Längen der Rastkrallen ermöglichen eine Art stufenweises Aufweiten des Verriegelungsbauteils. Die paarweise Anordnung der verschieden langen Rastkrallen auf dem Umfang gewährleistet eine definierte symmetrische Aufweitung.

In einer Weiterbildung der Erfindung weist das Verriegelungsbauteil gegenüber dem Kupplungskopf eine Verdrehsicherung auf.

Die Verdrehsicherung verbessert die Symmetrie und Abfolge des Aufweitens des Verriegelungsbauteils.

In einer Weiterbildung der Erfindung weisen die Rastkrallen an ihren radial innengelegenen Enden von der Einstecköffnung der Kupplungsmuffe axial zurück weisende Sperrnasen auf.

Die Gefahr, das Verriegelungsbauteil vom Kupplungskopf abzuschieben, ist beim Einstecken des Kupplungssteckers am größten. Das Verriegelungsbauteil wird beim Einstecken von der Einstecköffnung der Kupplungsmuffe axial zurück geschoben. Gleichzeitig werden die Rastkrallen nach außen gedrängt. Die Sperrnasen sorgen dafür, dass die Rastkrallen beim Einstecken eines Kupplungssteckers nicht aus den Schlitzen im Kupplungskopf herausgleiten können.

In einer Weiterbildung der Erfindung weist der Kupplungskopf von seiner Einstecköffnung axial beabstandete, ringsegmentartige, nach radial außen weisende Sperrstege auf, wobei der axiale Abstand zwischen den Stützstegen und den Sperrstegen so bemessen ist, dass das Verriegelungsbauteil mit axialem Spiel in dem Abstand zu liegen kommt.

Die Sperrstege sorgen zusätzlich für eine definierte axiale Lage des Verriegelungsbauteils auch beim Einstecken des Kupplungssteckers.

In einer Weiterbildung der Erfindung weist der flache, offene Federstahlring in seinen Übergangsbereichen zu den jeweils nach radial Innen ragenden Rastkrallen den Übergangsbereich verstärkende Sicken auf.

Derartige Sicken sorgen für eine gute Übertragung von Kräften aus den Rastkrallen in den flachen offenen Federstahlring, so dass diese Bereiche gegen Dauerbruch gut gesichert sind.

In einer Weiterbildung der Erfindung weisen die radial nach Innen ragenden Rastkrallen Ausnehmungen auf, und weist der Kupplungskopf im Bereich der Schlitze an einem in Umfangsrichtung liegenden Ende der jeweiligen Schlitze sattelförmige Kuppen auf, wobei Ausnehmungen und Kuppen in ihrer Formgebung korrespondieren, und ist der offene Federring manuell über einen beim Einstecken des Kupplungssteckers erreichbaren Öffnungsbetrag hinaus zu öffnen, wobei die Ausnehmungen der Rastkrallen auf den Kuppen des Kupplungskopfes zu liegen kommen, sodass der Federstahlring in dieser Öffnungsposition einrastet.

Eine derartige Öffnung ermöglicht einem Werker, beispielsweise bei Wartungsarbeiten das Verriegelungsbauteil manuell zu öffnen und in der Öffnungsposition einzurasten, sodass eine anschließende Schließung bei Wiedermontage erleichtert ist. Die Einrastung ist dann vom Werker durch leichtes Verschieben des Verriegelungsbauteils wieder aufhebbar.

In einer Weiterbildung der Erfindung weist der Kupplungskopf von seiner Einstecköffnung beabstandete, abgeschrägte, nach radial innen ragende, axial ausgerichtete Abstützstreben auf, wobei die Abschrägung so ausgebildet ist, dass die Abstützstreben mit zunehmender Entfernung von der Einstecköffnung zunehmend weiter radial nach innen ragen.

Derartige Abstützstreben dienen dazu, den konischen Kupplungsstecker beim Erreichen einer vorgegebenen Einschubtiefe an einem zu weiten Einschieben in das Innere der Kupplungsmuffe zu hindern, um Schäden an der Kupplungsmuffe zu vermeiden.

In einer Weiterbildung der Erfindung weist der Kupplungskörper an seinem dem Kupplungskopf abgewandten Ende einen Anschlussbereich mit einer aufgeschobenen weiterführenden Fluidleitung auf, wobei Anschlussbereich und Fluidleitung mit einer Kunststoffumspritzung fluiddicht und stoffschlüssig miteinander verbunden sind.

Eine derartige Anordnung hat den Vorteil, dass bei der Herstellung der erfindungsgemäßen Fluidleitungskupplung die weitere Fluidleitung, beispielsweise ein Schlauch, direkt mit anbringbar ist.

In einer Weiterbildung der Erfindung weist der Kupplungskörper an seinem dem Kupplungskopf abgewandten Ende eine weitere, durch Anspritzen direkt an den Kupplungskörper stoffschlüssig und fluiddicht mit dem Kupplungskörper verbundene weitere Fluidleitung auf.

Durch direktes Anspritzen der weiteren Fluidleitung an den Kupplungskörper kann ein separater Anschluss entfallen. Die weitere Fluidleitung kann, beispielsweise als blasgeformte Kunststoffleitung, auch an einem Ende als Kupplungskörper ausgebildet sein.

Weiter wird eine Vorrichtung zur Herstellung einer erfindungsgemäßen Fluidleitungskupplung der vorstehend beschriebenen Art beschrieben.

Mit einem mehrstufigen Spritzgießwerkzeug sind Kupplungskopf und Kupplungsmuffe in einem zweistufigen Spritzvorgang zusammen spritzbar, wobei beispielsweise zunächst der Kupplungskopf in einer ersten Stufe spritzbar und dann mittels einer Umlegeeinrichtung in die folgende Stufe umlegbar ist, in der dann die Kupplungsmuffe direkt an den Kupplungskopf anspritzbar ist. Dabei kann die Spritzwärme aus dem ersten Teil das Zusammenspritzen der beiden Teile in der zweiten Stufe erleichtern. Es ist natürlich auch die umgekehrte Reihenfolge möglich.

Parallel dazu ist im Stanzbiegewerkzeug ein Verriegelungsbauteil als geteilter Federstahlring mit Rastkrallen herstellbar, der nach der zweiten Spritzstufe mittels einer weiteren Umlegeeinrichtung am Kupplungskopf montierbar ist.

In einer weiteren Spritzstufe ist es mit der Vorrichtung möglich, eine auf den Kupplungskörper aufgesteckt Fluidleitung mittels ringförmigen Umspritzens in dieser Spritzstufe fluiddicht und stoffschlüssig mit dem Kupplungskörper zu verbinden. Die Erfindung betrifft weiter ein Verfahren zur Herstellung der erfindungsgemäßen Fluidleitungskupplung.

Der Erfindung lag die Aufgabe zugrunde, ein Verfahren zu schaffen, mit dem eine kostengünstige Herstellung der erfindungsgemäßen Fluidleitungskupplung möglich ist. Diese Aufgabe wird dadurch gelöst, dass das Verfahren mindestens folgende Arbeitsschritte aufweist, nämlich
A) Spritzen jeweils eines Kupplungskopfes und eines Kupplungskörpers in einer ersten Spritzstufe einer Herstellvorrichtung
B) Stanzen und Biegen eines Verriegelungsbauteils in Form eines offenen Federstahlrings mit Rastkrallen in einem Stanz-Biege-Werkzeug der Herstellvorrichtung
C) Umlegen des Kupplungskopfes und des Kupplungskörpers in eine gemeinsame zweite Spritzstufe der Herstellvorrichtung,
E1) Zusammenspritzen des Kupplungskörpers mit dem Kupplungskopf zu einer Kupplungsmuffe in der zweiten Spritzstufe, dabei Montage des Verriegelungsbauteils an dem Kupplungskopf.

Durch dieses Verfahren ist eine direkte Herstellung der fertigen Fluidleitungskupplung in wenigen Arbeitsschritten und in nur einer Vorrichtung möglich.

In einer Weiterbildung der Erfindung weist das Verfahren mindestens weitere Arbeitsschritte auf, nämlich
D) Aufschieben einer weiteren Fluidleitung (4) auf die zum Anschluss weiterer Fluidleitungen (4) vorgesehenen Öffnung der Kupplungsmuffe (2, 3)
E2) Zusammenspritzen des Kupplungskörpers (3) mit dem Kupplungskopf (2) zu einer Kupplungsmuffe (2, 3) in der zweiten Spritzstufe, dabei Montage des Verriegelungsbauteils (7) an dem Kupplungskopf (2) und Umspritzen (5) der Fluidleitungskupplung (1) und der weiteren Fluidleitung (4) im Bereich der zum Anschluss weiterer Fluidleitungen (4) vorgesehenen Öffnung der Kupplungsmuffe (2, 3).

Auf diese Weise ist eine nachträgliche Befestigung der weiteren Fluidleitung, beispielsweise durch Schlauchschellen nicht erforderlich.

Anhand der Zeichnung wird nachstehend ein Ausführungsbeispiel der Erfindung näher erläutert.

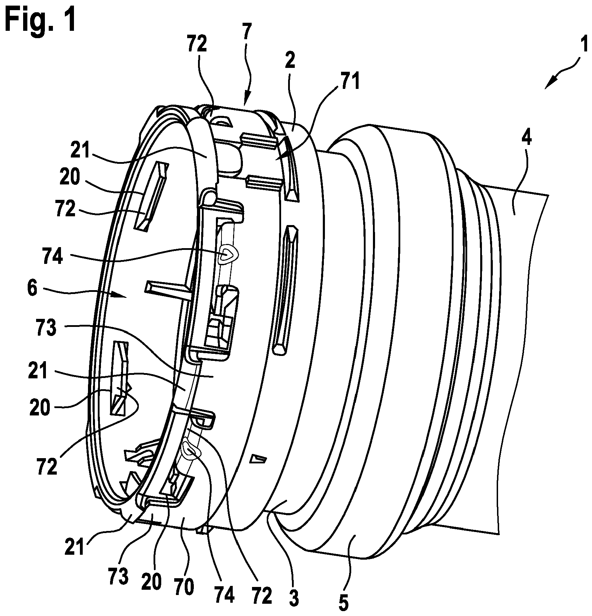

In der Fig. 1 ist eine erfindungsgemäße Fluidleitungskupplung 1 in einer perspektivischen Darstellung gezeigt. Die Fluidleitungskupplung 1 weist einen Kupplungskopf 2 und einen Kupplungskörper 3 auf, wobei Kupplungskopf 2 und Kupplungskörper 3 fluiddicht und unlösbar stoffschlüssig miteinander verbunden sind.

Eine weiterführende Fluidleitung, hier ein Kunststoffschlauch 4, ist auf den Kupplungskörper 3 aufgeschoben. Der Kunststoffschlauch 4 ist mit einem Kunststoffring 5 abgedichtet und damit fluiddicht und stoffschlüssig mit dem Kupplungskörper 3 verbunden.

Kupplungskopf 2, Kupplungskörper 3 und Kunststoffring 5 sind in einer gemeinsamen, hier nicht gezeigten Vorrichtung durch Spritzgießen hergestellt.

Die Fluidleitungskupplung 1 weist ein erstes Ende 6 zum Einstecken eines hier nicht gezeigten Kupplungssteckers auf. Am Kupplungskopf 2 ist ein Verriegelungsbauteil 7 angeordnet, das als Stanzbiegeteil ausgebildet ist. Ein Federstahlring 70 bildet den Axialteil des Verriegelungsbauteils 7. Der Federstahlring 70 umfasst den Kupplungskopf 2 und weist einen Schlitz 71 auf. Der Schlitz 71 ist notwendig, um den Federstahlring 70 zur Montage und Gewährleistung seiner Funktion auffedern zu können.

Der Kupplungskopf 2 weist auf dem Umfang verteilt eine vorbestimmte Anzahl an sich in Umfangsrichtung erstreckenden Schlitzen 20 auf. Das Verriegelungsbauteil 7 weist Rastkrallen 72 auf, die sich durch die Schlitze 20 radial in das Innere der Fluidleitungskupplung 1 erstrecken. Außerdem weist das Verriegelungsbauteil 7 Stützzungen 73 auf, die sich axial in Richtung auf die Einstecköffnung 6 erstrecken.

Der Kupplungskopf 2 weist auf dem Umfang verteilt eine vorbestimmte Anzahl an ringsegmentartig ausgebildeten Stützstegen 21 auf, die Anzahl Lage mit den Stützzungen 73 korrespondieren.

Das Verriegelungsbauteil 7 weist an jeder Rastkralle 72 im Übergang von der Rastkralle 72 in den Federstahlring 70 eine Verstärkungssicke 74 auf, die die Rastkrallen 72 gegen den Federstahlring 70 versteifen.

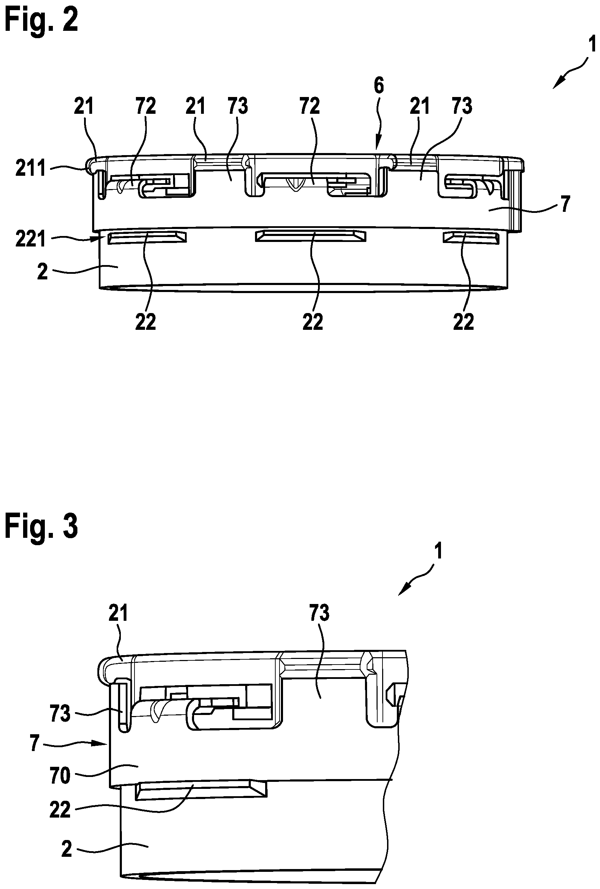

In Fig. 2 ist der Kupplungskopf 2 in einem Teilausschnitt als Draufsicht gezeigt. Die Ansicht zeigt die Fluidleitungskupplung 1 in einem verriegelten Zustand. Die Fluidleitungskupplung 1 ist in diesem Zustand durch einen hier nicht gezeigten, in die Einstecköffnung 6 eingesteckten Kupplungsstecker axial auf Zug belastet, das bedeutet, dass Verriegelungsbauteil 7 ist über die Rastkrallen 72 in Richtung auf die Einstecköffnung 6 gezogen. Die Stützzungen 73 sind dabei gegen die Stützstege 21 gezogen und stützen sich dort ab.

Die Stützstege 21 weisen an ihrem jeweils radial außenliegenden Ende von der Einstecköffnung 6 axial zurück weisende Sperrnasen 211 auf. Die Stützzungen 73 greifen in diesem Zustand zwischen den Kupplungskopf 2 und Sperrnasen 211 ein, sodass die Stützzungen nicht nach radial außen ausweichen können.

Der Kupplungskopf 2 weist von der Einstecköffnung 6 axial beabstandete, ringsegmentartige, radial nach außen weisende Sperrstege 22 auf. In der gezeigten Position ist das Verriegelungsbauteil 7 in Richtung Einstecköffnung 6 gezogen. Dadurch ist zwischen dem Federstahlring 70 und den Sperrstegen ein Spalt zum andern 21 ausgebildet.

In Fig. 3 ist ein Teilabschnitt der erfindungsgemäßen Fluidleitungskupplung 1 gezeigt. Der hier gezeigte Zustand zeigt den Kupplungskopf 2 mit Verriegelungsbauteil 7 in einem Zustand, der den Beginn des Einschiebens eines hier nicht gezeigten Kupplungssteckers repräsentiert.

Das Verriegelungsbauteil 7 ist axial in Richtung von der Einschuböffnung weg geschoben und stößt mit seinem Federstahlring 70 gegen die Sperrstege 22. Die Stützzungen 73 greifen nicht hinter die Sperrnasen 211. Stützstege 22. Dadurch ist es möglich, den Federstahlring 70 in radialer Richtung aufzufedern.

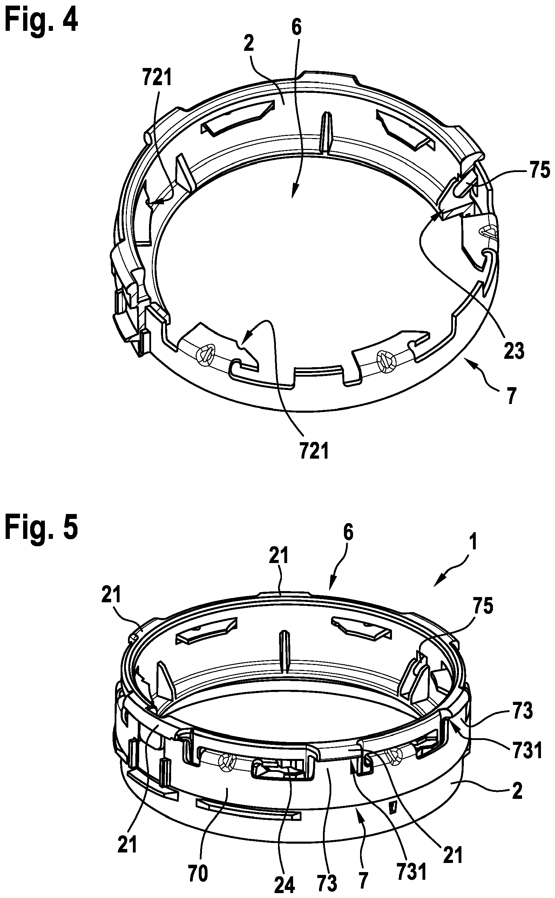

In Fig. 4 ist der Kupplungskopf 2 mit Verlust Bauteil 7 mit Blickrichtung in die Einschuböffnung 6 perspektivisch als Teilschnitt dargestellt. Ein Kupplungsstecker ist nicht dargestellt. Der Kupplungskopf 2 weist an einer vorbestimmten Stelle an seinem Umfang einen Durchbruch 23 auf, in den eine Verdrehsicherungszunge 75 des Verriegelungsbauteils 7 eingreift. Auf diese Weise ist das Verriegelungsbauteil 7 gegen Verdrehung auf dem Kupplungskopf 2 gesichert.

Die Rastkrallen 72 weisen an ihrem radial innen liegenden Enden teilweise Ausnehmungen 721 auf.

In Fig. 5 ist der Kupplungskopf 2 ebenfalls mit Blickrichtung in die Einstecköffnung 6 gezeigt. Auch hier ist ein Kupplungsstecker nicht gezeigt. Die Stützstege 21 sind derart angeordnet, dass sie in Umfangsrichtung schräg stehen, also eine gewindeartige Steigung aufweisen. Die zugeordneten Stützzungen 73 weisen korrespondierend abgeschrägte Enden 731 auf.

Die Steigung der Stützstege 21 ist einerseits analog zu einem Linksgewinde und andererseits analog zu einem Rechtsgewinde ausgebildet. Die Steigungsrichtung wechselt an der Verdrehsicherungszunge 75, sodass durch die Steigungen der Stützstege 21 mit den Steigungen der Stützzungenenden 731 bei Zugbelastung, d.h. Anpressung der Stützzungenenden 731 gegen die Stützstege 21 eine Umfangskraft erzeugbar ist, die in Richtung auf eine Schließung des Federstahlrings 70 gerichtet ist, sodass sich das Verriegelungsbauteil 7 bei Belastung nicht öffnet.

Im Bereich des Auslaufens der Spalte 21 im Kupplungskopf 2 weist der Kupplungskopf 2 teilweise sattelförmige, radial nach außen ragende Kuppen 24 auf. Bei manueller Öffnung des Verriegelungsbauteils 7 können die Ausnehmungen 721 der Rastkrallen 72 mit den Kuppen 24 einschnappen, sodass das Verriegelungsbauteil 7 in geöffneter Stellung verbleiben kann.

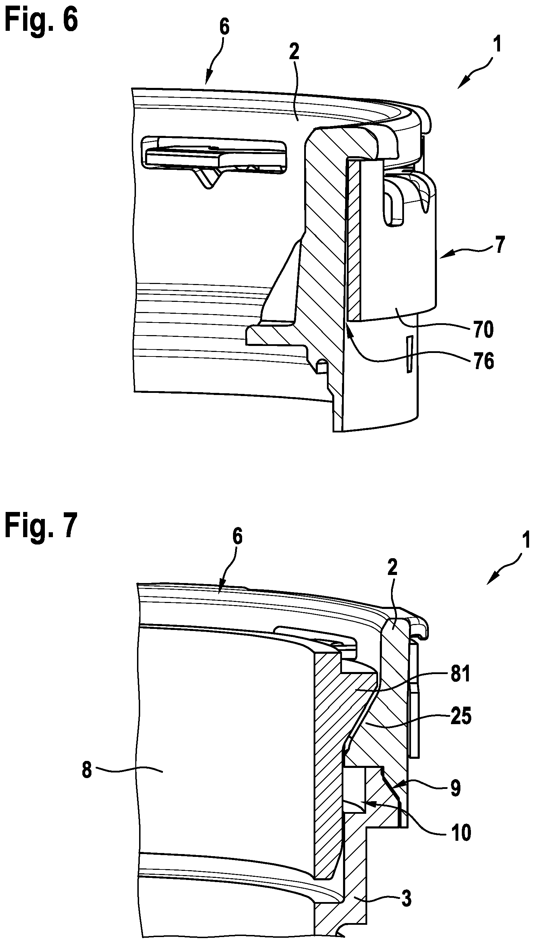

In Fig. 6 ist ein Teilausschnitt des Kupplungskopfes 2 mit Verriegelungsbauteil 7 gezeigt. Der Kupplungskopf 7 ist konisch ausgebildet, sodass zwischen dem Kupplungskopf 2 und dem Federstahlring 70 ein in Richtung auf die Einstecköffnung 6 abnehmender Spalt 76 besteht. Dieser Spalt 76 ermöglicht eine elastische, wellenartige Verformung des Federstahlrings 70.

In Fig. 7 ist ein Teilschnitt der erfindungsgemäßen Fluidleitungskupplung 1 mit einem eingesteckten Kupplungsstecker 8 gezeigt. Der Kupplungskopf 2 und der Kupplungskörper 3 sind durch Spritzguss stoffschlüssig miteinander verbunden und bilden an einer Nahtstelle 9 einen Ringspalt 10, der zur Aufnahme einer hier nicht gezeigten Dichtung vorgesehen ist.

Der Kupplungskopf 2 weist auf seinem Umfang verteilt von der Einschuböffnung 6 beabstandet radial nach innen ragende, sich axial erstreckende abgeschrägte Abstützstreben 25 auf, von denen hier nur eine dargestellt ist.

Die Abstützstreben 25 dienen dazu, den Kupplungsstecker 8 mit konischem Abschnitt 81 in eingestecktem Zustand abzustützen, sodass er nicht weiter in die Fluidleitungskupplung 1 einschiebbar ist.

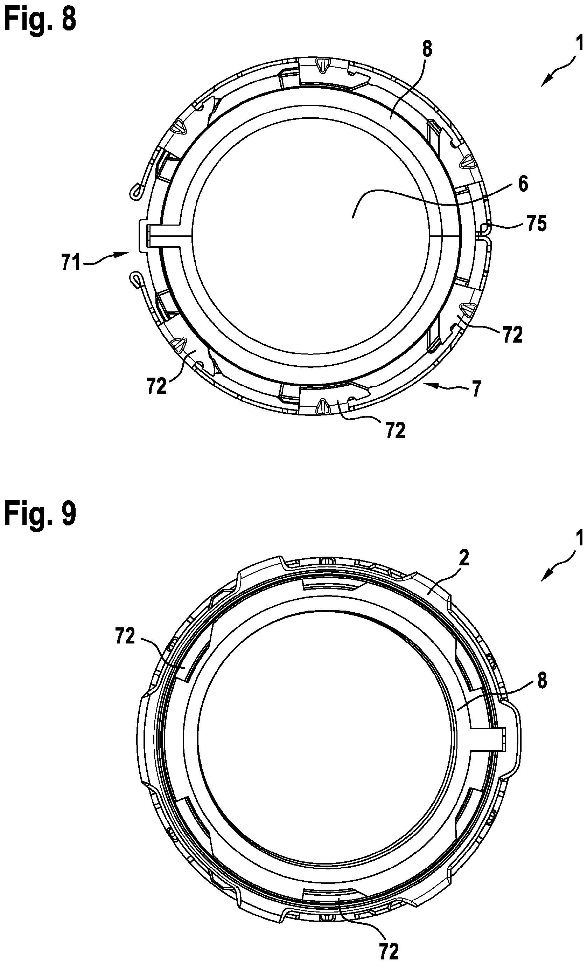

In Fig. 8 ist die erfindungsgemäße Fluidleitungskupplung 1 in einem Querschnitt gezeigt. Der Kupplungsstecker 8 ist in den Kupplungskopf 2 eingesteckt, jedoch noch nicht verrastet. Das Verriegelungsbauteil 7 ist aufgefedert.

Die Rastkrallen 72 weisen unterschiedliche radiale Längen auf, das heißt sie ragen unterschiedlich weit in die Einstecköffnung 6 hinein. Die größte radiale Länge weisen die dem Spalt 71 direkt benachbarten Rastkrallen 72 auf, diese werden vom Kupplungsstecker 8 als erstes kontaktiert und nach außen verschoben.

Die zweitgrößte radiale Länge weisen die Rastkrallen 72 auf, die dem Spalt 71 gegenüber liegen. Diese werden vom Kupplungsstecker 8 bei weiterem Einschieben als nächstes nach außen verschoben. Die übrigen Rastkrallen 72 weisen eine deutlich geringere radiale Länge auf und werden vom Kupplungsstecker 8 nicht kontaktiert.

Diese Anordnung ist notwendig, damit das Verriegelungsbauteil 7 so geöffnet werden kann, dass der Kupplungsstecker 8 vollständig einschiebbar ist. Das Verriegelungsbauteil 7 erfährt also beim Einschieben des Kupplungssteckers 8 sowohl eine radiale Öffnungsbewegung als auch eine exzentrische Verschiebung und wird durch die Verdrehsicherung 75 in einer definierten Position geführt.

In der Fig. 9 ist die Fluidleitungskupplung 1 in verriegelter Position gezeigt. Die Rastkrallen 72 sind in ihre Ausgangsposition zurückgeschnappt und verriegeln den Kupplungsstecker 8, sodass dieser nicht wieder aus dem Kupplungskopf 2 herausgeschoben werden kann.

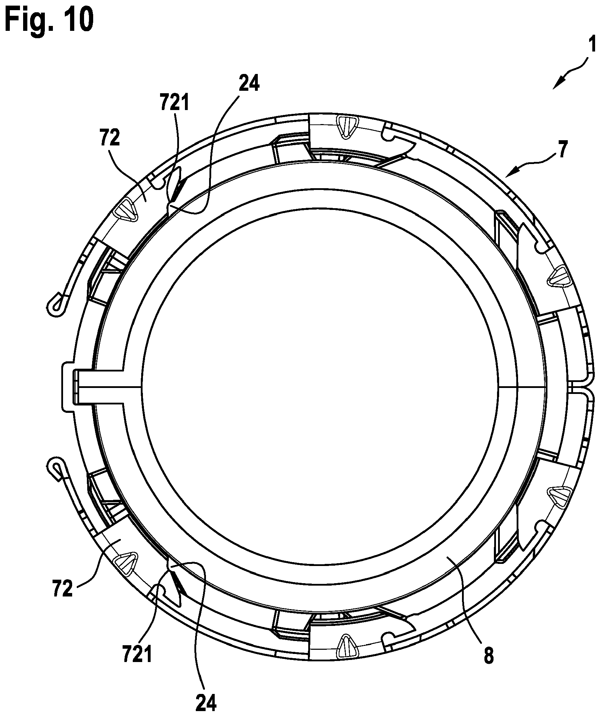

Fig. 10 ist die Fluidleitungskupplung 1 in einer manuell geöffneten Position gezeigt. Der Kupplungsstecker 8 ist noch eingeschoben, dass Verriegelungsbauteil 7 vollständig, d.h. über die Öffnungsposition hinaus geöffnet, die durch den Kontakt mit dem Kupplungsstecker 8 erreichbar ist. Durch diese Öffnung rasten die Ausnehmungen 721 der Rastkrallen 72 auf den Kuppen 24 des Kupplungskopfes 2 ein, sodass das Verriegelungsbauteil 7 nicht selbsttätig in seine Ausgangsposition zurück schnappt. Aufgrund der geringen Höhe der Kuppen 24 ist die Verrastung sehr leicht zu entrasten, sodass bereits die Erschütterung beim Wiedereinschieben des Kupplungssteckers 8 dazu ausreichen kann.

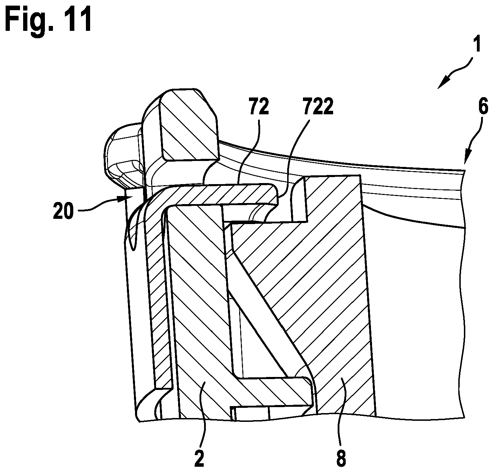

In Fig. 11 ist ein Schnitt durch die erfindungsgemäße Fluidleitungskupplung 1 im Bereich einer Rastkrallen 72 vergrößert dargestellt. Der Kupplungsstecker 8 ist eingeschoben, die Rastkrallen 72 sind in Verriegelungsposition.

An ihren radial innen liegenden Enden weisen die Rastkrallen 72 jeweils eine von der Einschuböffnung 6 axial zurück gerichtete Sperrnase 722 auf. Diese Sperrnasen 722 erschweren ein Herausgleiten der Rastkrallen 72 aus den Schlitzen 20 des Kupplungskopfes 2 beim Einschieben des Kupplungssteckers 8, da sie an der Kante der Schlitze 20 hängen bleiben.

### Bezugszeichenliste

### (Teil der Beschreibung)

- 1: Fluidleitungskupplung
- 2: Kupplungskopf
- 20: Schlitze im Kupplungskopf 2
- 21: Stützstege
- 211: Sperrnasen der Stützstege 21
- 22: Sperrstege
- 23: Durchbruch
- 24: Kuppen
- 25: Abstützstreben
- 3: Kupplungskörper
- 4: Kunststoffschlauch
- 5: Kunststoffring
- 6: Einstecköffnung
- 7: Verriegelungsbauteil
- 70: Federstahlring des Verriegelungsbauteils 7
- 71: Schlitz im Federstahlring 70
- 72: Rastkrallen
- 721: Ausnehmungen der Rastkrallen 72
- 722: Sperrnasen der Rastkrallen 72
- 73: Stützzungen
- 731: Enden der Stützzungen 73
- 74: Verstärkungssicke
- 75: Verdrehsicherungszunge
- 76: konischer Spalt
- 8: Kupplungsstecker
- 81: Konus des Kupplungssteckers 8
- 9: Nahtstelle zwischen Kupplungskopf 2 und Kupplungskörper 3
- 10: Ringspalt

## Patentansprüche

1. Reversibel lösbare Fluidleitungskupplung (1), mindestens aufweisend eine Kupplungsmuffe (2, 3), ein Verriegelungselement (7) und einen Kupplungsstecker (8), wobei die Kupplung (1) mindestens zwei ringartige Kupplungsteile (2, 3), nämlich einen Kupplungskopf (2) und einen Kupplungskörper (3) aufweist, wobei Kupplungskopf (2) und Kupplungskörper (3) aus Kunststoff ausgebildet und fluiddicht und unlösbar zu einer rohrförmigen, zum Einstecken des Kupplungssteckers (8) geeigneten Kupplungsmuffe (2, 3) mit einer ersten, dem Kupplungskopf (2) zugeordneten Öffnung (6) zum Einstecken des Kupplungssteckers (8) und einer zweiten, dem Kupplungskörper (3) zugeordneten Öffnung zum Anschluss weiterer Fluidleitungen (4) verbunden sind, wobei der Kupplungskopf (2) in Umfangsrichtung ausgerichtete Schlitze (20) und ringsegmentartige, nach radial außen weisende Stützstege (21) aufweist und das Verriegelungsbauteil (7) als flacher offener Federstahlring (70) mit radial ins Innere des Federstahlrings (70) ragenden, auf dem Umfang des Federstahlrings (70) verteilten Rastkrallen (72) und axial ausgerichteten Stützzungen (73) ausgebildet ist, wobei das Verriegelungsbauteil (7) im Bereich des Kupplungskopfes (2) den Kupplungskopf (2) federnd umfasst derart, dass die Rastkrallen (72) durch die Schlitze (20) im Kupplungskopf (2) ins Innere der Kupplungsmuffe (2, 3) hineinragen und die Stützzungen (73) des Federstahlrings (70) mit den Stützstegen (21) des Kupplungskopfes (2) so korrespondieren, dass jeweils eine Stützzunge (73) einem Stützsteg (21) zugeordnet ist.

2. Fluidleitungskupplung (1) nach Anspruch 1, **dadurch gekennzeichnet, dass** der Kupplungskopf (2) mindestens in dem zur Umfassung durch das Verriegelungsbauteil (7) vorgesehenen Bereich konisch ausgebildet ist, wobei der größere Durchmesser des Konus der Einstecköffnung (6) des Kupplungssteckers (8) zugeordnet ist.

3. Fluidleitungskupplung (1) nach Anspruch 1 oder 2, **dadurch gekennzeichnet, dass** die Stützstege (21) des Kupplungskopfes (2) an ihren jeweils radial außen gelegenen Enden von der Einstecköffnung (6) der Kupplungsmuffe (2, 3) axial zurück weisende Sperrnasen (211) aufweisen, die radial vom Kupplungskopf (2) beabstandet sind, wobei der Abstand zwischen Sperrnasen (211) und Kupplungskopf (2) für das Eingreifen der Stützzungen (73) des Verriegelungsbauteils (7) geeignet ist.

4. Fluidleitungskupplung (1) nach mindestens einem der Ansprüche 1 bis 3, **dadurch gekennzeichnet, dass** die Stützzungen (73) des Verriegelungsbauteils (7) an ihren den Stützstegen (21) des Kupplungskopfes (2) zugeordneten Enden in Umfangsrichtung der Kupplungsmuffe (2, 3) abgeschrägt sind und die Stützstege (21) des Kupplungskopfes (2) jeweils eine zur Abschrägung der Stützzungen (73) korrespondierende Schrägung aufweisen, wobei die Schrägungen in der Art eines Rechts- sowie in der Art eines Linksgewindes ausgebildet sind und die Anzahl der links und rechts ausgerichteten Schrägungen gleich ist.

5. Fluidleitungskupplung (1) nach mindestens einem der vorstehenden Ansprüche, **dadurch gekennzeichnet, dass** die Rastkrallen (72) des Verriegelungsbauteils (7) jeweils paarweise unterschiedliche radiale Längen aufweisen.

6. Fluidleitungskupplung (1) nach mindestens einem der vorstehenden Ansprüche, **dadurch gekennzeichnet, dass** das Verriegelungsbauteil (7) gegenüber dem Kupplungskopf (2) eine Verdrehsicherung (23, 75) aufweist.

7. Fluidleitungskupplung (1) nach mindestens einem der vorstehenden Ansprüche, **dadurch gekennzeichnet, dass** die Rastkrallen (72) an ihren radial innengelegenen Enden von der Einstecköffnung (6) der Kupplungsmuffe (2, 3) axial zurück weisende Sperrnasen (722) aufweisen.

8. Fluidleitungskupplung (1) nach mindestens einem der vorstehenden Ansprüche, **dadurch gekennzeichnet, dass** der Kupplungskopf (2) von seiner Einstecköffnung (6) axial beabstandet ringsegmentartige, nach radial außen weisende Sperrstege (22) aufweist, wobei der axiale Abstand zwischen den Stützstegen (21) und den Sperrstegen (22) so bemessen ist, dass das Verriegelungsbauteil (7) mit axialem Spiel in dem Abstand zu liegen kommt.

9. Fluidleitungskupplung (1) nach mindestens einem der vorstehenden Ansprüche, **dadurch gekennzeichnet, dass** der flache, geteilte Federstahlring (70) in seinen Übergangsbereichen zu den jeweils nach radial Innen ragenden Rastkrallen (72) den Übergangsbereich verstärkende Sicken (74) aufweist.

10. Fluidleitungskupplung (1) nach mindestens einem der vorstehenden Ansprüche, **dadurch gekennzeichnet, dass** die radial nach innen ragenden Rastkrallen (72) Ausnehmungen (721) aufweisen und der Kupplungskopf (2) im Bereich der Schlitze (20) an einem in Umfangsrichtung liegenden Ende der jeweiligen Schlitze (20) sattelförmige Kuppen (24) aufweist, wobei Ausnehmungen (721) und Kuppen (24) in ihrer Formgebung korrespondieren und der geteilte Federring (7) manuell über einen beim Einstecken des Kupplungssteckers (8) erreichbaren Öffnungsbetrag hinaus zu öffnen ist, wobei die Ausnehmungen (721) der Rastkrallen (72) auf den Kuppen (24) des Kupplungskopfes (2) zu liegen kommen, sodass der Federstahlring (70) in dieser Öffnungsposition einrastet.

11. Fluidleitungskupplung (1) nach mindestens einem der vorstehenden Ansprüche, **dadurch gekennzeichnet, dass** der Kupplungskopf (2) von seiner Einstecköffnung (6) beabstandete, abgeschrägte, nach radial innen ragende, axial ausgerichtete Abstützstreben (25) aufweist, wobei die Abschrägung so ausgebildet ist, dass die Abstützstreben (25) mit zunehmender Entfernung von der Einstecköffnung (6) zunehmend weiter radial nach innen ragen.

12. Fluidleitungskupplung (1) nach mindestens einem der vorstehenden Ansprüche, **dadurch gekennzeichnet, dass** der Kupplungskörper (3) an seinem dem Kupplungskopf (2) abgewandten Ende einen Anschlussbereich mit einer aufgeschobenen weiterführenden Fluidleitung (4) aufweist, wobei Anschlussbereich und Fluidleitung (4) mit einer Kunststoffumspritzung (5) fluiddicht und stoffschlüssig miteinander verbunden sind.

13. Fluidleitungskupplung (1) nach mindestens einem der Ansprüche 1 bis 11, **dadurch gekennzeichnet, dass** der Kupplungskörper (3) an seinem dem Kupplungskopf (2) abgewandten Ende eine weitere, durch Anspritzen direkt an den Kupplungskörper (3) stoffschlüssig und fluiddicht mit dem Kupplungskörper (3) verbundene weitere Fluidleitung aufweist.

14. Verfahren zur Herstellung einer Fluidleitungskupplung (1) nach Anspruch 1 bis 13, **dadurch gekennzeichnet, dass** das Verfahren mindestens folgende Arbeitsschritte aufweist, nämlich
A) Spritzen jeweils eines Kupplungskopfes (2) und eines Kupplungskörpers (3) in einer ersten Spritzstufe einer Herstellvorrichtung
B) Stanzen und Biegen eines Verriegelungsbauteils (7) in Form eines geteilten Federstahlrings (70) mit Rastkrallen (72) in einem Stanz-Biege-Werkzeug der Herstellvorrichtung
C) Umlegen des Kupplungskopfes (2) und des Kupplungskörpers (3) in eine gemeinsame zweite Spritzstufe der Herstellvorrichtung,
E1) Zusammenspritzen des Kupplungskörpers (3) mit dem Kupplungskopf (2) zu einer Kupplungsmuffe (2, 3) in der zweiten Spritzstufe, dabei Montage des Verriegelungsbauteils (7) an dem Kupplungskopf (2).

15. Verfahren nach Anspruch 14, **dadurch gekennzeichnet, dass** das Verfahren mindestens weitere Arbeitsschritte aufweist, nämlich
D) Aufschieben einer weiteren Fluidleitung (4) auf die zum Anschluss weiterer Fluidleitungen (4) vorgesehene Öffnung der Kupplungsmuffe (2, 3)
E2) Zusammenspritzen des Kupplungskörpers (3) mit dem Kupplungskopf (2) zu einer Kupplungsmuffe (2, 3) in der zweiten Spritzstufe, dabei Montage des Verriegelungsbauteils (7) an dem Kupplungskopf (2) und Umspritzen (5) der Fluidleitungskupplung (1) und der weiteren Fluidleitung (4) im Bereich der zum Anschluss weiterer Fluidleitungen (4) vorgesehenen Öffnung der Kupplungsmuffe (2, 3).

## Claims

1. Reversibly detachable fluid-line coupling (1), at least having a coupling sleeve (2, 3), a locking element (7) and a coupling plug (8), wherein the coupling (1) has at least two ring-like coupling parts (2, 3), namely a coupling head (2) and a coupling body (3), wherein coupling head (2) and coupling body (3) are formed from plastic and are connected in a fluid-tight and non-detachable manner to form a tubular coupling sleeve (2, 3) which is suitable for plugging-in of the coupling plug (8) and which has a first opening (6), assigned to the coupling head (2), for plugging-in of the coupling plug (8) and has a second opening, assigned to the coupling body (3), for connection of further lines (4), wherein the coupling head (2) has circumferentially oriented slots (20) and ring segment-like, radially outwardly pointing support webs (21), and the locking component (7) is in the form of a flat, open spring-steel ring (70) which has latching claws (72) projecting radially into the interior of the spring-steel ring (70) and distributed over the circumference of the spring-steel ring (70) and which has axially oriented support tongues (73), wherein, in the region of the coupling head (2), the locking component (7) resiliently surrounds the coupling head (2) in such a way that the latching claws (72) project into the interior of the coupling sleeve (2, 3) through the slots (20) in the coupling head (2) and the support tongues (73) of the spring-steel ring (70) correspond to the support webs (21) of the coupling head (2) in such a way that in each case one support tongue (73) is assigned to one support web (21).

2. Fluid-line coupling (1) according to Claim 1, **characterized in that** the coupling head (2) is of conical form at least in the region intended for being surrounded by the locking component (7), wherein the larger diameter of the cone is assigned to the plug-in opening (6) of the coupling plug (8).

3. Fluid-line coupling (1) according to Claim 1 or 2, **characterized in that**, at their respective radially outer ends, the support webs (21) of the coupling head (2) have blocking noses (211) which point axially back from the plug-in opening (6) of the coupling sleeve (2, 3) and which are spaced apart radially from the coupling head (2), wherein the spacing between blocking noses (211) and coupling head (2) is suitable for the engagement of the support tongues (73) of the locking component (7).

4. Fluid-line coupling (1) according to at least one of Claims 1 to 3, **characterized in that** the support tongues (73) of the locking component (7), at their ends which are assigned to the support webs (21) of the coupling head (2), are bevelled in a circumferential direction of the coupling sleeve (2, 3) and the support webs (21) of the coupling head (2) each have a slope which corresponds to the bevel of the support tongues (73), wherein the slopes are configured in the manner of a righthand thread and in the manner of a left-hand thread and there are an equal number of slopes oriented to the left and slopes oriented to the right.

5. Fluid-line coupling (1) according to at least one of the preceding claims, **characterized in that** the latching claws (72) of the locking component (7), in each case in pairs, have different radial lengths.

6. Fluid-line coupling (1) according to at least one of the preceding claims, **characterized in that** the locking component (7) has, in relation to the coupling head (2), a rotation-prevention means (23, 75).

7. Fluid-line coupling (1) according to at least one of the preceding claims, **characterized in that**, at their radially inner ends, the latching claws (72) have blocking noses (722) which point axially back from the plug-in opening (6) of the coupling sleeve (2, 3).

8. Fluid-line coupling (1) according to at least one of the preceding claims, **characterized in that** the coupling head (2) has ring segment-like blocking webs (22) which are spaced apart axially from its plug-in opening (6) and which point radially outwards, wherein the axial spacing between the support webs (21) and the blocking webs (22) is of such a size that the locking component (7) comes to be situated in the spacing with axial play.

9. Fluid-line coupling (1) according to at least one of the preceding claims, **characterized in that**, in its transition regions to the in each case radially inwardly projecting latching claws (72), the flat, split spring-steel ring (70) has beads (74) which reinforce the transition region.

10. Fluid-line coupling (1) according to at least one of the preceding claims, **characterized in that** the radially inwardly projecting latching claws (72) have recesses (721), and, in the region of the slots (20), the coupling head (2) has saddle-shaped tips (24) at one end, situated in the circumferential direction, of the respective slots (20), wherein recesses (721) and tips (24) correspond in terms of their shaping and the split spring ring (7) can be opened manually beyond an opening amount that is achievable when the coupling plug (8) is plugged in, wherein the recesses (721) of the latching claws (72) come to be situated against the tips (24) of the coupling head (2), so that, in this open position, the spring-steel ring (70) latches in.

11. Fluid-line coupling (1) according to at least one of the preceding claims, **characterized in that** the coupling head (2) has bevelled, radially inwardly projecting, axially oriented support struts (25) which are spaced apart from its plug-in opening (6), wherein the bevel is configured in such a way that, as the distance from the plug-in opening (6) increases, the support struts (25) project increasingly further radial inwards.

12. Fluid-line coupling (1) according to at least one of the preceding claims, **characterized in that**, at its end directed away from the coupling head (2), the coupling body (3) has a connection region with a pushed-on onward-leading fluid line (4), wherein connection region and fluid line (4) are connected to one another in a fluid-tight and materially bonded manner by way of a plastic encapsulation (5).

13. Fluid-line coupling (1) according to at least one of Claims 1 to 11, **characterized in that**, at its end directed away from the coupling head (2), the coupling body (3) has a further fluid line which is connected in a materially bonded and fluid-tight manner to the coupling body (3) by way of injection-moulding directly onto the coupling body (3).

14. Method for producing a fluid-line coupling (1) according to Claims 1 to 13, **characterized in that** the method comprises at least the following working steps, specifically
A) injection-moulding in each case one coupling head (2) and one coupling body (3) in a first injection-moulding stage of a production apparatus,
B) stamping and bending a locking component (7) in the form of a split spring-steel ring (70) with latching claws (72) in a stamping and bending tool of the production apparatus,
C) folding over the coupling head (2) and the coupling body (3) in a common second injection-moulding stage of the production apparatus,
E1) co-moulding the coupling body (3) and the coupling head (2) to form a coupling sleeve (2, 3) in the second injection-moulding stage, with mounting of the locking component (7) on the coupling head (2).

15. Method according to Claim 14, **characterized in that** the method comprises at least further working steps, specifically
D) pushing on a further fluid line (4) at that opening of the coupling sleeve (2, 3) which is intended for connection of further fluid lines (4),
E2) co-moulding the coupling body (3) and the coupling head (2) to form a coupling sleeve (2, 3) in the second injection-moulding stage, with mounting of the locking component (7) on the coupling head (2) and encapsulation (5) of the fluid-line coupling (1) and the further fluid line (4) in the region of that opening of the coupling sleeve (2, 3) which is intended for connection of further fluid lines (4).

## Revendications

1. Accouplement de conduite de fluide (1) détachable de manière réversible, présentant au moins un manchon d'accouplement (2, 3), un élément de verrouillage (7) et une fiche d'accouplement (8), l'accouplement (1) présentant au moins deux parties d'accouplement (2, 3) de type annulaire, à savoir une tête d'accouplement (2) et un corps d'accouplement (3), la tête d'accouplement (2) et le corps d'accouplement (3) étant réalisés en matière plastique et étant reliés de manière étanche aux fluides et inamovible en un manchon d'accouplement tubulaire (2, 3) approprié pour l'insertion de la fiche d'accouplement (8), avec une première ouverture (6) associée à la tête d'accouplement (2) pour l'insertion de la fiche d'accouplement (8) et une deuxième ouverture associée au corps d'accouplement (3) pour le raccordement d'autres conduites de fluide (4), la tête d'accouplement (2) présentant des fentes (20) orientées dans la direction périphérique et des nervures d'appui (21) dirigées radialement vers l'extérieur, de type segment annulaire, et le composant de verrouillage (7) étant réalisé sous forme de bague en acier à ressort (70) ouverte plate avec des griffes d'encliquetage (72) réparties sur la périphérie de la bague en acier à ressort (70), faisant saillie radialement à l'intérieur de la bague en acier à ressort (70), et des languettes d'appui (73) orientées axialement, le composant de verrouillage (7) entourant de manière élastique la tête d'accouplement (2) dans la zone de la tête d'accouplement (2) de telle sorte que les griffes d'encliquetage (72) pénètrent à l'intérieur du manchon d'accouplement (2, 3) à travers les fentes (20) dans la tête d'accouplement (2) et que les languettes d'appui (73) de la bague en acier à ressort (70) correspondent aux nervures d'appui (21) de la tête d'accouplement (2) de telle sorte qu'une languette d'appui (73) est respectivement associée à une nervure d'appui (21).

2. Accouplement de conduite de fluide (1) selon la revendication 1, **caractérisé en ce que** la tête d'accouplement (2) est réalisée sous forme conique au moins dans la zone prévue pour être entourée par le composant de verrouillage (7), le plus grand diamètre du cône étant associé à l'ouverture d'insertion (6) de la fiche d'accouplement (8).

3. Accouplement de conduite de fluide (1) selon la revendication 1 ou 2, **caractérisé en ce que** les nervures d'appui (21) de la tête d'accouplement (2) présentent, à leurs extrémités respectives situées radialement à l'extérieur, des ergots de blocage (211) dirigés axialement en arrière de l'ouverture d'insertion (6) du manchon d'accouplement (2, 3), qui sont espacés radialement de la tête d'accouplement (2), la distance entre les ergots de blocage (211) et la tête d'accouplement (2) étant appropriée pour l'engagement des languettes d'appui (73) du composant de verrouillage (7).

4. Accouplement de conduite de fluide (1) selon au moins l'une quelconque des revendications 1 à 3, **caractérisé en ce que** les languettes d'appui (73) du composant de verrouillage (7) sont chanfreinées à leurs extrémités associées aux nervures d'appui (21) de la tête d'accouplement (2) dans la direction périphérique du manchon d'accouplement (2, 3) et les nervures d'appui (21) de la tête d'accouplement (2) présentent chacune un chanfrein correspondant au chanfrein des languettes d'appui (73), les chanfreins étant réalisés à la manière d'un filetage à droite ainsi qu'à la manière d'un filetage à gauche et le nombre de chanfreins orientés à gauche et à droite étant identique.

5. Accouplement de conduite de fluide (1) selon au moins l'une quelconque des revendications précédentes, **caractérisé en ce que** les griffes d'encliquetage (72) du composant de verrouillage (7) présentent des longueurs radiales différentes par paire.

6. Accouplement de conduite de fluide (1) selon au moins l'une quelconque des revendications précédentes, **caractérisé en ce que** le composant de verrouillage (7) présente une sécurité anti-rotation (23, 75) par rapport à la tête d'accouplement (2).

7. Accouplement de conduite de fluide (1) selon au moins l'une quelconque des revendications précédentes, **caractérisé en ce que** les griffes d'encliquetage (72) présentent, à leurs extrémités situées radialement à l'intérieur, des ergots de blocage (722) dirigés axialement en arrière de l'ouverture d'insertion (6) du manchon d'accouplement (2, 3).

8. Accouplement de conduite de fluide (1) selon au moins l'une quelconque des revendications précédentes, **caractérisé en ce que** la tête d'accouplement (2) présente des nervures de blocage (22) en forme de segments annulaires, espacées axialement de son ouverture d'insertion (6), dirigées radialement vers l'extérieur, la distance axiale entre les nervures d'appui (21) et les nervures de blocage (22) étant dimensionnée de telle sorte que le composant de verrouillage (7) vienne se placer avec un jeu axial dans la distance.

9. Accouplement de conduite de fluide (1) selon au moins l'une quelconque des revendications précédentes, **caractérisé en ce que** la bague en acier à ressort (70) divisée plate présente, dans ses zones de transition vers les griffes d'encliquetage (72) faisant respectivement saillie radialement vers l'intérieur, des moulures (74) renforçant la zone de transition.

10. Accouplement de conduite de fluide (1) selon au moins l'une quelconque des revendications précédentes, **caractérisé en ce que** les griffes d'encliquetage (72) faisant saillie radialement vers l'intérieur présentent des évidements (721) et la tête d'accouplement (2) présente des calottes (24) en forme de selle dans la zone des fentes (20) à une extrémité des fentes respectives (20) située dans la direction périphérique, les évidements (721) et les calottes (24) correspondant par leur forme et la bague à ressort divisée (7) pouvant être ouverte manuellement au-delà d'une valeur d'ouverture pouvant être atteinte lors de l'insertion de la fiche d'accouplement (8), les évidements (721) des griffes d'encliquetage (72) venant se placer sur les calottes (24) de la tête d'accouplement (2), de telle sorte que la bague en acier à ressort (70) s'enclenche dans cette position d'ouverture.

11. Accouplement de conduite de fluide (1) selon au moins l'une quelconque des revendications précédentes, **caractérisé en ce que** la tête d'accouplement (2) présente des entretoises d'appui (25) espacées de son ouverture d'insertion (6), chanfreinées, faisant saillie radialement vers l'intérieur, orientées axialement, le chanfrein étant réalisé de telle sorte que les entretoises d'appui (25) font saillie radialement de plus en plus vers l'intérieur à un éloignement croissant de l'ouverture d'insertion (6).

12. Accouplement de conduite de fluide (1) selon au moins l'une quelconque des revendications précédentes, **caractérisé en ce que** le corps d'accouplement (3) présente, à son extrémité détournée à la tête d'accouplement (2), une zone de raccordement avec une conduite de fluide (4) enfilée se prolongeant, la zone de raccordement et la conduite de fluide (4) étant reliées l'une à l'autre de manière étanche aux fluides et par liaison de matière avec un surmoulage de matière plastique (5).

13. Accouplement de conduite de fluide (1) selon au moins l'une quelconque des revendications 1 à 11, **caractérisé en ce que** le corps d'accouplement (3) présente, à son extrémité détournée de la tête d'accouplement (2), une autre conduite de fluide reliée au corps d'accouplement (3) par injection directement sur le corps d'accouplement (3) par liaison de matière et de manière étanche aux fluides.

14. Procédé de fabrication d'un accouplement de conduite de fluide (1) selon les revendications 1 à 13, **caractérisé en ce que** le procédé présente au moins les étapes de travail suivantes, à savoir
A) l'injection respective d'une tête d'accouplement (2) et d'un corps d'accouplement (3) dans une première étape d'injection d'un dispositif de fabrication,
B) le poinçonnage et le pliage d'un composant de verrouillage (7) sous la forme d'une bague en acier à ressort divisée (70) avec des griffes d'encliquetage (72) dans un outil de poinçonnage et de pliage du dispositif de fabrication,
C) le transfert de la tête d'accouplement (2) et du corps d'accouplement (3) dans une deuxième étape d'injection commune du dispositif de fabrication,
E1) l'injection du corps d'accouplement (3) conjointement avec la tête d'accouplement (2) en un manchon d'accouplement (2, 3) dans la deuxième étape d'injection, et ainsi le montage du composant de verrouillage (7) sur la tête d'accouplement (2).

15. Procédé selon la revendication 14, **caractérisé en ce que** le procédé présente au moins d'autres étapes de travail, à savoir
D) l'enfilage d'une autre conduite de fluide (4) sur l'ouverture du manchon d'accouplement (2, 3) prévue pour le raccordement d'autres conduites de fluide (4),
E2) l'injection du corps d'accouplement (3) conjointement avec la tête d'accouplement (2) en un manchon d'accouplement (2, 3) dans la deuxième étape d'injection, et ainsi le montage du composant de verrouillage (7) sur la tête d'accouplement (2) et le surmoulage (5) de l'accouplement de conduite de fluide (1) et de l'autre conduite de fluide (4) dans la zone de l'ouverture du manchon d'accouplement (2, 3) prévue pour le raccordement d'autres conduites de fluide (4).
